# EUROPEAN PATENT SPECIFICATION

(11) **EP 2 819 218 B1**
(45) Date of publication and mention of the grant of the patent: **20.04.2016**
(21) Application number: 14173984.7
(22) Date of filing: 25.06.2014
(51) Int. Cl.: H01M 2/30, H01M 10/04, H01M 10/42, H01M 10/052, H01M 2/02, H01M 10/058

(54) **Battery pack**
Batteriepack
Bloc-batteries

(30) Priority: 25.06.2013 US 201361839057 P; 02.06.2014 US 201414293409
(43) Date of publication of application: 31.12.2014
(73) Proprietor: Samsung SDI Co., Ltd., Yongin-si, Gyeonggi-do (KR)
(72) Inventor: Hong, Sung-Ho, Gyeonggi-do (KR)
(74) Representative: Mounteney, Simon James

(56) References cited:
- JP-A- 2003 208 886
- JP-A- 2009 163 932
- US-A1- 2004 257 036

## Description

### BACKGROUND

### 1. Field

An aspect of the present invention relates to a battery pack.

### 2. Description of the Related Art

Recently, battery packs have been variously used as power sources of portable electronic devices. As the portable electronic devices are used in various fields, demands on battery packs are being rapidly increased. The battery packs can be charged/discharged a plurality of times, and accordingly are economically and environmentally efficient. Thus, the use of the battery packs is encouraged.

As the small size and light weight of electronic devices are required, the small size and light weight of battery packs are also required. However, since a material such as lithium having high reactivity is provided to the inside of the battery pack, the small size and light weight of the battery pack is limited due to the safety of the battery pack. Accordingly, a variety of studies have been conducted to develop a battery pack that can be small in size and light in weight while improving the safety of the battery pack.

Document JP2003208886 discloses an electrode tab protruding outside of a battery case and comprising a first opening; and a protective circuit module with a tab mounting portion including a second opening which is t coupled to the first opening by a rivet.

### SUMMARY

The present invention relates to a battery pack having a new electrode tab according to claim 1.

Embodiments provide a battery pack capable of improving process efficiency by applying a new method for attaching a protective circuit module.

According to an aspect of the present invention, there is provided a battery pack, including: an electrode assembly configured to have first and second electrode tabs; a battery case configured to accommodate the electrode assembly therein so that the first and second electrode tabs are protruded to the outside of the battery case; and a protective circuit module configured to have a plurality of tab mounting portions coupled to the respective first and second electrode tabs, wherein a first alignment portion is provided to each of the first and second electrode tabs, and a second alignment portion contacted with the first alignment portion is provided to each tab mounting portion.

The first alignment portion includes an opening.

The second alignment portion includes a projection having a section corresponding to the opening.

The projection may be protruded by a first length to the outside of the opening by being inserted into the opening. The first length may be 0.5 to 1 mm.

The projection may include an end portion protruded to the outside of the first alignment portion. The end portion may have a hook or mushroom shape.

The tab mounting portion may be provided to have a size corresponding to that of each of the first and second electrode tabs. The tab mounting portion may be provided inside the protective circuit module, or may be protruded to the outside of the protective circuit module so as to face each of the first and second electrode tabs.

A coupling layer may be further included between the tab mounting portion and each of the first and second electrode tabs.

The coupling layer may be provided to each of the first and second electrode tabs. The coupling layer may be provided around the first alignment portion.

The coupling layer may include an Ag paste or conductive adhesive.

As described above, according to the present invention, it is possible to provide a battery pack having a new electrode tab.

Further, it is possible to provide a battery pack capable of improving process efficiency by applying a new method for attaching a protective circuit module.

At least some of the above and other features of the invention are set out in the claims.

### BRIEF DESCRIPTION OF THE DRAWINGS

Example embodiments of the present invention will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments of the present invention to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a battery pack according to an embodiment of the present invention.
FIG. 2 is an exploded perspective view of the battery pack shown in FIG. 1.
FIG. 3A is a sectional view taken along line I-I of FIG. 1.
FIG. 3B is an exploded view of FIG. 3A.
FIG. 4 is a sectional view of an electrode tab and a tab mounting portion according to another embodiment of the present invention.
FIG. 5 is a sectional view of an electrode tab and a tab mounting portion according to still another embodiment of the present invention.
FIG. 6 is a sectional view of an electrode tab and a tab mounting portion according to still another embodiment of the present invention.

### DETAILED DESCRIPTION

In the following detailed description, only certain example embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, When an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

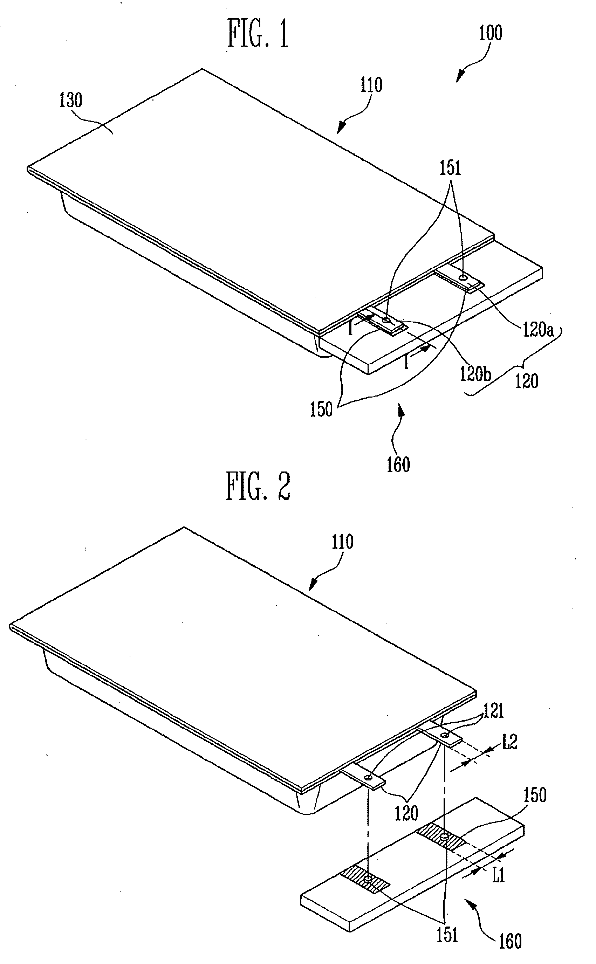

FIG. 1 is a perspective view of a battery pack according to an embodiment of the present invention. FIG. 2 is an exploded perspective view of the battery pack shown in FIG. 1.

Referring to FIGS. 1 and 2, the battery pack 100 according to this embodiment includes an electrode assembly configured to have first and second electrode tabs 120a and 120b; a battery case 130 configured to accommodate the electrode assembly therein so that the first and second electrode tabs 120a and 120b are protruded to the outside of the battery case 130; and a protective circuit module 160 configured to have a plurality of tab mounting portions 150 coupled to the respective first and second electrode tabs 120a and 120b. A first alignment portion 121 is provided to each of the first and second electrode tabs 120a and 120b, and a second alignment portion 151 contacted with the first alignment portion 121 is provided to each tab mounting portion 150.

In this embodiment, the battery pack 100 is configured with a secondary battery 110 and the protective module 160 electrically connected to the secondary battery 110. The first and second electrode tabs 120a and 120b are protruded from the battery case 130 in the secondary battery 110. The first and second electrode tabs 120a and 120b may be electrically connected to the respective tab mounting portions 150 of the protective circuit module 160.

In this embodiment, the secondary battery 110 is configured with the battery case 130, and the electrode assembly and an electrolyte, which are accommodated in the battery case 130. The electrode assembly is configured with first and second electrode plates having different polarities, and a separator. For example, the first electrode plate may be a positive electrode plate formed by coating a positive electrode active material including lithium on a base material, and the second electrode plate may be a negative electrode plate formed by coating a negative electrode active material including carbon on a base material. The separator is interposed between the first and second electrode plates so as to prevent the first and second electrode plates from coming in direct contact with each other. The separator may include a plurality of pores that form a passage of ions or the electrolyte.

In the present embodiment, the electrolyte is accommodated together with the electrode assembly in the battery case 130. In this case, the electrolyte allows current to easily flow between the first and second electrode plates. For example, the electrolyte may include a lithium salt serving as a supply source of lithium ions, and a non-aqueous organic solvent serving as a medium through which ions associated with an electrochemical reaction can move.

After the electrode assembly and the electrolyte are accommodated in the battery case 130, the battery case 130 may be sealed along an edge portion thereof. In this case, the edge portion of the battery case 130 is sealed after the first and second electrode tabs 120a and 120b are provided to protrude to the outside of the battery case 130 through the edge portion of the battery case 130. The battery case 130 may be a pouch-type battery case in which polymer resin, thin-film metal and polymer resin are laminated in a plurality of layers. For example, the secondary battery 110 according to this embodiment is a pouch-type secondary battery.

In the present embodiment, the battery pack 100 includes the protective circuit module 160 provided adjacent to the first and second electrode tabs 120a and 120b. The protective circuit module 160 is electrically connected to the first and second electrode tabs 120a and 120b so as to control electrical flow in the battery pack 100. The protective circuit module 160 isprovided with a secondary element, a circuit and the like, which constitute a safety device of the battery pack 100. The plurality of tab mounting portions 150 connected to the respective first and second electrode tabs 120a and 120b are provided in the protective circuit module 160.

The tab mounting portion 150 may be provided to have a size corresponding to that of each of the first and second electrode tabs 120a and 120b. For example, the tab mounting portion 150 may be provided inside the protective circuit module 160, or may be protruded to the outside of the protective circuit module 160 so as to face the respective first and second electrode tabs 120a and 120b. In this embodiment, the case where the tab mounting portions 150 are mounted inside the protective circuit module 160 will be described.

The first and second electrode tabs 120 are provided on the respective tab mounting portions 150. The width L1 of the tab mounting portion 150 may be formed identical to or greater than the width L2 of each of the first and second electrode tabs 120. For example, the width L1 of the tab mounting portion 150 may be about 5 to 7mm, and the width L2 of each of the first and second electrode tabs 120 may be about 5 to 6mm. That is, the width L1 of the tab mounting portion 150 may be 1.2 times or less of the width L2 of each of the first and second electrode tabs 120.

For example, in this embodiment, the first alignment portion 121 is provided to each of the first and second electrode tabs 120, and the second alignment portion 151 contacted with the first alignment portion 121 is provided to the tab mounting portion 150. The first and second electrode tabs 120 are mounted on the respective tab mounting portion 150 and then fixed through a process such as welding. In this case, the positions of the first and second electrode tabs 120 can be easily aligned by the first and second alignment portions 121 and 151, and thus it is possible to decrease the size of the tab mounting portion 150 corresponding to each of the first and second electrode tabs 120. After each of the first and second electrode tabs 120 is mounted on the tab mounting portion 150, each of the first and second electrode tabs 120 is fixed to the tab mounting portion 150 by coupling the first and second alignment portions 121 and 151 to each other. Thus, it is possible to easily perform the welding process and to decrease the margin of the tab mounting portion 150. Further, the space occupied by the tab mounting portion 150 is decreased in the protective circuit module 160, and thus it is possible to efficiently use a space for a protective element, etc., mounted on the protective circuit module 160.

Generally, in a battery pack having first and second electrode tabs protruded to the outside of a battery case, a protective circuit module is provided corresponding to the width of a secondary battery. That is, the width of the protective circuit module is provided corresponding to that of a surface on which the first and second electrode tabs are protruded in the secondary battery. In this case, each of the first and second electrode tabs is electrically connected to a tab mounting portion of the protective circuit module through welding. As the width of the secondary battery is variously changed, it is not easy to align the position between the tab mounting portion of the protective circuit module and each of the first and second electrode tabs. Further, the tab mounting portion is frequently misaligned with each of the first and second electrode tabs, and therefore, a failure occurs in the welding process. As a result, the process efficiency is decreased. Accordingly, the size of the tab mounting portion, e.g., the width of the tab mounting portion should be 1.6 times or more that the width of each of the first and second electrode tabs. Therefore, production cost is increased, and it is difficult to secure welding quality. Further, a high-specification facility and a jig are required to weld each of the first and second electrode tabs to the tab mounting portion.

However, in the battery pack according to this embodiment, the position between the tab mounting portion and each of the first and second electrode tabs can be easily aligned, thereby improving the process efficiency. Further, the size of the tab mounting portion can be provided corresponding to that of each of the first and second electrode tabs. Furthermore, in the battery pack according to this embodiment, the position between the tab mounting portion and each of the first and second electrode tabs can be easily aligned without using a separate jig, so that it is possible to prevent occurrence of a failure and to secure high welding quality.

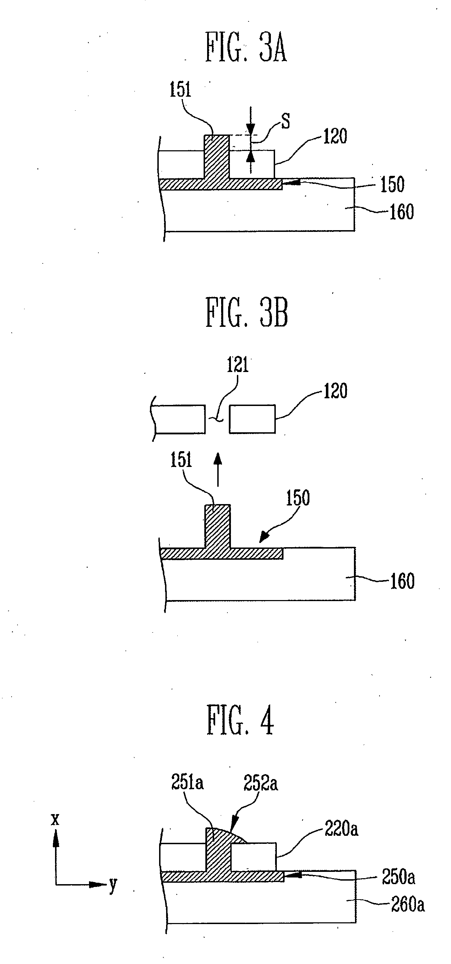

FIG. 3A is a sectional view taken along line I-I of FIG. 1. FIG. 3B is an exploded view of FIG. 3A.

Referring to FIGS. 3A and 3B, the first alignment portion 121 provided to each of the first and second electrode tabs 120 and the second alignment portion 151 provided to the tab mounting portion 150 may be coupled to each other. For example, any one of the first and second alignment portions 121 and 151 may include an opening, and the other of the first and second alignment portions 121 and 151 may include a projection inserted into the opening. Although it has been described in this embodiment that the first alignment portion 121 is formed in the shape of an opening and the second alignment portion 151 is formed in the shape of a projection having a section corresponding to the opening, the present invention is not limited thereto.

When each of the first and second electrode tabs 120 is provided on the tab mounting portion 150, the position of each of the first and second electrode tab 10 can be easily aligned with the tab mounting portion 150 by the first and second alignment portions 121 and 151. Since the projection as the second alignment portion 151 is inserted into the opening as the first alignment portion 121, each of the first and second electrode tabs 120 is fixed to the tab mounting portion 150, thereby easily performing a subsequent welding process.

After each of the first and second electrode tabs 120 is mounted on the tab mounting portion 150, the projection as the second alignment portion 151 may be protruded to the outside of the opening by being inserted into the opening as the first alignment portion 121. When assuming that the length of the second alignment portion 151 protruded from an outer surface of the first alignment portion 121 is a first length S, the first length S may be about 0.5 to 1 mm. The portion of the second alignment portion comprising a first length S may be referred to as an end portion. In the welding process between the tab mounting portion 150 and each of the first and second electrode tab 120, the welding process may be performed after the first length S of the second alignment portion 151 is pressed. In a case where the first length S is less than 0.5mm, each of the first and second electrode tab 120 is not fixed to the tab mounting portion 150 and easily separated from the tab mounting portion 150 after the second alignment portion 151 is inserted into the first alignment portion 121. Therefore, it is difficult to secure welding quality. For example, each of the first and second electrode tabs 120 and the tab mounting portion 150 may be made of metal that is an electrical conductor, and therefore, the frictional force between the tab mounting portion 150 and each of the first and second electrode tabs 120 is low due to properties of the metal. Accordingly, the first length S is preferably maintained as a predetermined length in order to maintain the coupling between the first and second alignment portions 121 and 151 even after the second alignment portion 151 is inserted into the first alignment portion 121. The first length S may be 0.5mm or more. In addition, the first length S is preferably less than 1 mm. In a case where the first length S exceeds 1 mm, at least one portion of the first length S is pressed, and the welding process is then performed in order to secure the welding quality. before the welding process is performed. However, in a case where the first length S is longer than a predetermined length, a portion to be pressed in the first length S is increased. Therefore, unnecessary energy is wasted, thereby lowering the process efficiency. That is, the first length S is preferably 0.5 to 1 mm, in consideration of both the fixing force between the tab mounting portion 150 and each of the first and second electrode tabs 120 and the efficiency of the subsequent welding process. For example, the first length S is most preferably 0.8mm.

Hereinafter, other embodiments of the present invention will be described with reference to FIGS. 4 to 6. Contents of these embodiments, except the following contents, are similar to those of the embodiment described with reference to FIGS. 1 to 3, and therefore, their detailed descriptions will be omitted.

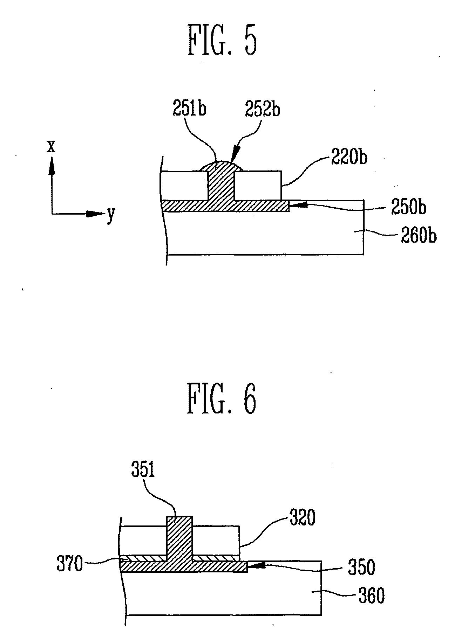

FIG. 4 is a sectional view of an electrode tab and a tab mounting portion according to another embodiment of the present invention. FIG. 5 is a sectional view of an electrode tab and a tab mounting portion according to still another embodiment of the present invention.

Referring to FIGS. 4 and 5, each of the first and second electrode tabs 220a or 220b is mounted on the tab mounting portion 250a or 250b provided to a protective circuit module 260a and 260b. In this case, a second alignment portion 251 a or 251 b provided to the tab mounting portion 250a or 250b further includes an end portion 252a or 252b inserted into an opening as a first alignment portion provided to each of the first and second electrode tabs 220a or 220b and then contacted with an outer surface of each of the first and second electrode tabs 220a or 220b.

In FIG. 5, the second alignment portion 251a is inserted into the first alignment portion in an X-direction and then fixed by the end portion 252a contacted with the outer surface of each of the first and second electrode tabs 220a. In this case, the end portion 252a is formed in the shape of a hook protruded in a Y-direction. In FIG. 6, the second alignment portion 251 b is inserted into the first alignment portion and then fixed by the mushroom-shaped end portion 252b. The section of the hook-or mushroom-shaped end portion 252a and 252b may be formed greater than that of the opening as the first alignment portion, and accordingly, the second alignment portion 251 a or 251 b inserted into the opening as the first alignment portion can be firmly fixed. The outer surface of the first alignment portion may further include surface roughness. For example, the surface roughness may be provided at a portion contacted with the end portion 252a or 252b of the second alignment portion 251 a or 251b on the outer surface of the first alignment portion. Accordingly, each of the first and second electrode tabs 220a or 220b can be firmly fixed to the tab mounting portion 250a or 250b.

FIG. 6 is a sectional view of an electrode tab and a tab mounting portion according to still another embodiment of the present invention.

Referring to FIG. 6, each of the first and second electrode tabs 230 is mounted on the tab mounting portion 350 of a protective circuit module 360. In this case, a coupling layer 370 is further included between the tab mounting portion 350 and each of the first and second electrode tabs 320. Particularly, an opening as a first alignment portion may be provided to each of the first and second electrode tabs 320, and a second alignment portion 351 inserted into the first alignment portion may be provided to the tab mounting portion 350. In this case, the coupling layer 370 is provided to each of the first and second electrode tabs 320, and may be provided at only an edge portion of the opening as the first alignment portion. The coupling layer 370 may be made of an adhesive material which allows each of the first and second electrode tabs 320 and the tab mounting portion 350 to be electrically connected to each other and simultaneously allows each of the first and second electrode tabs 320 and the tab mounting portion 350 to be physically fixed to each other. For example, the coupling layer 370 may include an Ag paste or conductive adhesive.

When each of the first and second electrode tabs 320 is provided on the tab mounting portion 350, the tab mounting portion 350 may be formed identical to or greater than each of the first and second electrode tabs 320, in consideration of a process margin. In a case where the coupling layer 370 is provided to the tab mounting portion 350, an unnecessary coupling layer 370 remains around each of the first and second electrode tabs 320 after each of the first and second electrode tabs 320 is mounted on the tab mounting portion 350. Therefore, an external appearance failure may be caused. Accordingly, the coupling layer 370 is provided to each of the first and second electrode tabs 320 formed identical to or smaller than the tab mounting portion 350, so that it is possible to prevent an external appearance failure due to the coupling layer 370 and to prevent waste of the unnecessary coupling layer 370, thereby reducing material cost.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack (100) comprising:
a battery case (130) ;
an electrode assembly accommodated inside the battery case (130) and comprising an electrode tab (120), that protrudes outside of the battery case (130) and comprises a first alignment portion (121) comprising an opening;
a protective circuit module (160) comprising a tab mounting portion (150) that includes a second alignment portion (151) comprising a projection; and
wherein the projection is inserted into the opening such that the first alignment portion (121) is coupled with the second alignment portion (151).

2. A battery pack (100) according to claim 1, wherein the projection (151) comprises an end portion which protrudes beyond the opening (121).

3. A battery pack (100) according to claim 2, wherein the length (S) of the end portion is between 0.5 to 1 mm, and the length (S) of the end portion is optionally 0.8mm.

4. A battery pack (100) according to claim 2 or any claim dependent thereon, wherein the end portion (252a, 252b) comprises a radius larger than the radius of the opening (121).

5. A battery pack (100) according to claim 2 or any claim dependent thereon, wherein the end portion (252a, 252b) comprises a hook or a mushroom shaped profile.

6. A battery pack (100) according to any preceding claim, wherein the tab mounting portion (150) is situated inside the protective circuit module.

7. A battery pack (100) according to any preceding claim, wherein the tab mounting portion (150) at least partially extends to an outer surface of the protective circuit module to face the electrode tab (120).

8. A battery pack (100) according to any preceding claim, wherein the ratio of a width of the tab mounting portion (150) and a width of the electrode tab (120) are equal to or larger than 1 and less than 1.2.

9. A battery pack (100) according to any preceding claim, wherein a coupling layer (370) is provided between the tab mounting portion (150) and the electrode tab (120).

10. A battery pack (100) according to claim 9, wherein the width of the coupling layer (370) is equal to or smaller than a width of the tab mounting portion (150).

11. A battery pack (100) according to claim 9 or 10, wherein the coupling layer (370) comprises an Ag paste or a conductive adhesive.

12. A battery pack (100) according to claim 9 or any dependent claim thereon wherein the coupling layer (370) is provided around the first alignment portion (121).

13. A battery pack (100) according to claim 9 or any dependent claim thereon wherein the coupling layer (370) is provided on the electrode tab (120).

## Patentansprüche

1. Batteriepack (100), umfassend:
ein Batteriegehäuse (130),
eine Elektrodenanordnung, die innerhalb des Batteriegehäuses (130) aufgenommen ist und eine Elektrodenlasche (120) aufweist, die aus dem Batteriegehäuse (130) vorspringt und einen ersten Ausrichtungsabschnitt (121) mit einer Öffnung umfasst;
ein Schutzschaltungsmodul (160), umfassend einen Laschenmontageabschnitt (150), der einen zweiten Ausrichtungsabschnitt (151) mit einem Vorsprung umfasst; und
wobei der Vorsprung in die Öffnung derart eingeführt ist, dass der erste Ausrichtungsabschnitt (121) mit dem zweiten Ausrichtungsabschnitt (151) gekoppelt ist.

2. Batteriepack (100) nach Anspruch 1, wobei der Vorsprung (151) einen Endabschnitt umfasst, der über die Öffnung (121) vorsteht.

3. Batteriepack (100) nach Anspruch 2, wobei die Länge (S) des Endabschnitts zwischen 0,5 und 1 mm liegt und die Länge (S) des Endabschnitts optional 0,8 mm beträgt.

4. Batteriepack (100) nach Anspruch 2 oder einem abhängigen Anspruch davon, wobei der Endabschnitt (252a, 252b) einen Radius umfasst, der größer als der Radius der Öffnung (121) ist.

5. Batteriepack (100) nach Anspruch 2 oder einem abhängigen Anspruch davon, wobei der Endabschnitt (252a, 252b) einen Haken oder ein pilzförmiges Profil umfasst.

6. Batteriepack (100) nach einem der vorhergehenden Ansprüche, wobei sich der Laschenmontageabschnitt (150) innerhalb des Schutzschaltungsmoduls befindet.

7. Batteriepack (100) nach einem der vorhergehenden Ansprüche, wobei sich der Montageabschnitt (150) mindestens teilweise zu einer äußeren Fläche des Schutzschaltungsmoduls erstreckt, um gegenüber der Elektordenlasche (120) zu liegen.

8. Batteriepack (100) nach einem der vorhergehenden Ansprüche, wobei das Verhältnis einer Breite des Laschenmontageabschnitts (150) und einer Breite der Elektrodenlasche (120) gleich wie oder größer als 1 und kleiner als 1,2 ist.

9. Batteriepack (100) nach einem der vorhergehenden Ansprüche, wobei eine Kopplungsschicht (370) zwischen dem Laschenmontageabschnitt (150) und der Elektrodenlasche (120) bereitgestellt ist.

10. Batteriepack (100) nach Anspruch 9, wobei die Breite der Kopplungsschicht (370) gleich wie oder kleiner als eine Breite des Laschenmontageabschnitts (150) ist.

11. Batteriepack (100) nach Anspruch 9 oder 10, wobei die Kopplungsschicht (370) eine Ag-Paste oder einen leitfähigen Kleber umfasst.

12. Batteriepack (100) nach Anspruch 9 oder einem abhängigen Anspruch davon, wobei die Kopplungsschicht (370) um den ersten Ausrichtungsabschnitt (121) vorgesehen ist.

13. Batteriepack (100) nach Anspruch 9 oder einem abhängigen Anspruch davon, wobei die Kopplungsschicht (370) auf der Elektrodenlasche (120) bereitgestellt ist.

## Revendications

1. Bloc-batteries (100), comprenant :
un boîtier de batterie (130) ;
un assemblage d'électrode logé à l'intérieur du boîtier de la batterie (130) et comprenant une languette d'électrode (120) débordant vers l'extérieur du boîtier de la batterie (130), et comprenant une première partie d'alignement (121) comprenant une ouverture ;
un module de circuit de protection (160), comprenant une partie de montage de la languette (150) englobant une deuxième partie d'alignement (151) comprenant une saillie ; et
dans lequel la saillie est insérée dans l'ouverture de sorte que la première partie d'alignement (121) est accouplée à la deuxième partie d'alignement (151).

2. Bloc-batteries (100) selon la revendication 1, dans lequel la saillie (151) comprend une partie d'extrémité débordant au-delà de l'ouverture (121).

3. Bloc-batteries (100) selon la revendication 2, dans lequel la longueur (S) de la partie d'extrémité est comprise entre 0,5 et 1 mm, la longueur (S) de la partie d'extrémité correspondant optionnellement à 0,8 mm.

4. Bloc-batteries (100) selon la revendication 2 ou selon l'une quelconque des revendications qui en dépend, dans lequel la partie d'extrémité (252a, 252b) comprend un rayon supérieur au rayon de l'ouverture (121).

5. Bloc-batteries (100) selon la revendication 2 ou selon l'une quelconque des revendications qui en dépend, dans lequel la partie d'extrémité (252a, 252b) comprend un crochet ou un profil en forme de champignon.

6. Bloc-batteries (100) selon l'une quelconque des revendications précédentes, dans lequel la partie de montage de la languette (150) se situe à l'intérieur du module de circuit de protection.

7. Bloc-batteries (100) selon l'une quelconque des revendications précédentes, dans lequel la partie de montage de la languette (150) s'étend au moins en partie vers une surface externe du module de circuit de protection, pour faire face à la languette d'électrode (120).

8. Bloc-batteries (100) selon l'une quelconque des revendications précédentes, dans lequel le rapport entre une largeur de la partie de montage de la languette (150) et une largeur de la languette d'électrode (120) est égal ou supérieur à 1 et inférieur à 1,2.

9. Bloc-batteries (100) selon l'une quelconque des revendications précédentes, dans lequel une couche d'accouplement (370) est agencée entre la partie de montage de la languette (150) et la languette d'électrode (120).

10. Bloc-batteries (100) selon la revendication 9, dans lequel la largeur de la couche d'accouplement (370) est égale ou inférieure à une largeur de la partie de montage de la languette (150).

11. Bloc-batteries (100) selon les revendications 9 ou 10, dans lequel la couche d'accouplement (370) comprend une pâte d'argent ou un adhésif conducteur.

12. Bloc-batteries (100) selon la revendication 9 ou selon l'une quelconque des revendications qui en dépend, dans lequel la couche d'accouplement (370) est agencée autour de la première partie d'alignement (121).

13. Bloc-batteries (100) selon la revendication 9 ou selon l'une quelconque des revendications qui en dépend, dans lequel la couche d'accouplement (370) est agencée sur la languette d'électrode (120).
